# EUROPEAN PATENT SPECIFICATION

(11) **EP 1 137 565 B1**
(45) Date of publication and mention of the grant of the patent: **06.08.2003**
(21) Application number: 99959573.9
(22) Date of filing: 10.12.1999
(51) Int. Cl.: B60T 13/26, B60T 17/18

(54) **VALVE FOR A BRAKING SYSTEM OF A VEHICLE AND TRAILER COMBINATION**
ANHÄNGERBREMSVENTIL
VANNE POUR SYSTEME DE FREINAGE POUR TRAIN ROUTIER TRACTEUR ET REMORQUE

(30) Priority: 11.12.1998 GB 9827483
(43) Date of publication of application: 04.10.2001
(73) Proprietor: WABCO AUTOMOTIVE U.K. LIMITED, Morley, Leeds, LS27 0HQ (GB)
(72) Inventor: Beck, Andrew Howard, Birkby, Huddersfield HD2 2XF (GB)
(74) Representative: Gray, James
(86) International application number: GB9904177
(87) International publication number: WO00035729

(56) References cited:
- EP-A- 0 371 935
- FR-A- 2 270 131

## Description

The invention relates to a valve for a braking system of a vehicle and trailer combination and is particularly concerned with a valve for use with supply and service brake lines of such a vehicle. Such a supply brake line is known as the "Red Line", the normal service braking being effected via a service brake line known as the "Yellow Line" of the braking system.
The Red Line serves to operate an emergency valve associated with an emergency air supply tank on the trailer. In normal circumstances, pressure in the Red Line serves to hold the valve closed to prevent air from operating the service brakes of the trailer. Should pressure in the Red Line fail, the drop in pressure allows the emergency valve to open whereby air in the tank applies the trailer brakes.

When the trailer is disconnected from the tractor, the disconnection of the Red Line releases the valve and air in the tank automatically applies the trailer brakes. However, a problem can arise when the Red Line is reconnected. If the Red Line is reconnected to the trailer, the restoration of pressure to the valve shuts off the tank from the service brakes of the trailer whereby the brakes are released. If the hand brake of the tractor has not first been applied, the release of trailer brakes can result in the vehicle running away, the consequences of which can be very dangerous.

An object of the present invention is to provide a valve for the braking system which will help to avoid the above problem.

According to an aspect of the invention there is provided a valve for a wheel braking system of a tractor and trailer combination, the valve comprising a service air inlet for connection to a service air supply line, a service air outlet for supplying air to control operation of a trailer wheel brake, an actuating member responsive to service air pressure, a supply inlet for connection to an air supply line of the tractor, a supply outlet for supplying air for actuation of a trailer wheel brake and a valve member for controlling flow of air between said supply inlet and said supply outlet, the valve member being movable against a bias applied by or via the actuating member from a closed condition to an open condition, wherein:
a) in the closed condition, air pressure at the supply inlet acts on a first area of the valve member, the force developed on the first area being insufficient to overcome said bias;
b) in the open condition air pressure at the supply inlet acts on a second area of the valve member, the force developed on said second area being sufficient to overcome said bias; and
c) air pressure at the service air inlet acts on an area of said actuating member in opposition to said bias, the force developed being sufficient to overcome said bias.

FR-A-2270131 discloses a tractor/trailer braking system having a breakaway coupling to ensure continued operation of the tractor brakes in the event of the trailer braking away comprising the features of the preamble of claim 1.

Such an arrangement enables the Red Line, which is normally connected to the said supply inlet to be reconnected to the trailer braking system without emergency air pressure being applied to release the brakes, the valve member biased into its closed position preventing communication between the supply inlet and outlet during the reconnection. Once the driver of the vehicle operates the brakes from the tractor cab, the bias will be overcome and the brakes will then operate normally.

In its closed position, the valve member preferably closes an orifice which is arranged to receive air from the supply inlet Where air under normal working pressure from the supply inlet is applied to the valve member, the area of the valve member to which the pressure is applied is such that the force on the valve is insufficient to overcome the bias which holds the valve closed.

Air supplied under normal working pressure through the service air inlet causes the actuator to move against the said bias. In such a case, the air pressure applied to the aforesaid area of the valve member can then move the valve member to an open position to allow air to flow from the supply inlet to the supply outlet Air pressure causing the valve member to open is then applied to a larger area of the valve member thereby causing it to remain open.

Once supply and service air pressures cease, the aforesaid bias causes the valve member to move back into its closed position.

According to another aspect of the invention there is provided a vehicle and trailer braking system which includes a valve in accordance with the first said aspect of the invention or in accordance with any of the consistory clauses relating thereto.

According to a further aspect of the invention there is provided a vehicle and trailer having a braking system according to the first said aspect of the invention or in accordance with any of the consistory clauses relating thereto.

A valve in accordance with the invention will now be described by way of example with reference to the accompanying drawings in which:
Fig 1 is a diagrammatic view of a braking system on an articulated vehicle illustrating the valve in cross section and in one operational condition and
Fig 2 is a view of the valve of Fig 1 in another operational condition.

An articulated vehicle comprises a tractor 10 and a trailer 12 which interconnect in the usual way through a fifth wheel coupling (not shown). The tractor 10 has the usual brake pedal 14 for service braking of the trailer 12 via a Yellow Line 16 and has the usual Red Line 18 for air supply to the trailer. A tank 20 is provided in known manner for providing a supply of braking air at least in response to the opening of an emergency braking valve 22. The valve 22 is of known kind and is normally held closed by pressure from the Red Line 18. Where the Red Line pressure ceases, the valve 22 opens and air from the tank 20 is then applied to operate the service brakes of the trailer indicated generally at 24.

A valve 26 in accordance with the invention is provided in the braking system. The valve 26 comprises a housing 28 having a service air inlet 30 connected to the Yellow Line 16 and a service air outlet 32 connected to a line for operating the service brakes 24. An actuating member in the form of a piston 34 is slidably and sealingly mounted in a cylinder 36 of the housing 28. The piston 34 is normally biased upwardly as viewed in the drawing by a spring 38. A vent 39 is formed in the housing 28 to vent a space beneath the piston 34.

The housing 28 defines a first chamber 40 between the piston 34 and a wall 42. The wall 42 is formed with a central guide 44 in which a pushrod 46 is slidably and sealingly mounted. The lower end of the pushrod 46 as viewed in the drawing contacts the piston 34.

The housing 28 has a supply inlet 48 connected to the Red Line 18 and a supply 50 connected to the valve 22. The inlet 48 terminates at an orifice 51 surrounded by a seat 52 for contact with a valve member in the form of a piston 54. The piston 54 is slidably and sealingly mounted in a further cylinder 56 of the housing 28. The piston 54 has an elastomeric insert 58 for sealing contact with the seat 52. The upper end of the pushrod 46 contacts the piston 54. A second chamber 60 is defined above the piston 54 downstream of the seat 52. The chamber 60 can communicate with the inlet 48 via a non-return valve 61. A vent 62 is formed in the housing 28 to vent a space between the wall 42 and the underside of the piston 54.

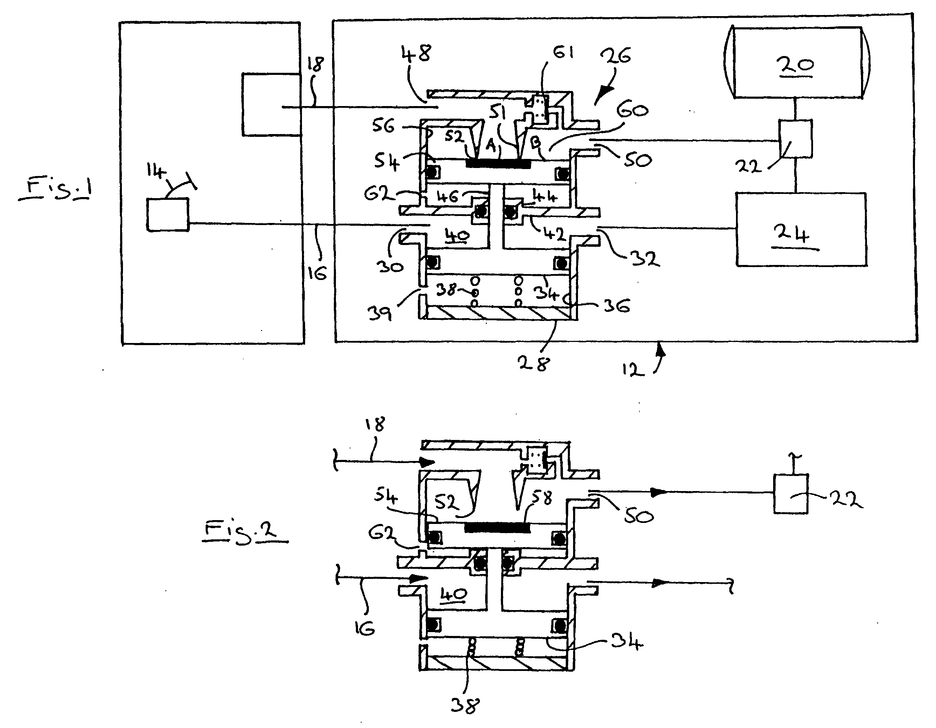

In a rest state with no pressures applied to the inlets 30, 48, the components of the valve 26 take up the positions shown in Fig 1. It will be noted that the spring 38 applies an upward bias to the piston 34 which is transmitted to the piston 54 via the pushrod 46 so as to hold the piston 54 against the seat 52. Once the vehicle is in use. air pressure applied to the inlet 48 from the Red Line 18 will act on a surface area A of the piston 54 inside the seat 52. The area A is such that the downward force acting on the piston 54 will not be sufficient to overcome the bias of the spring 38. However when the brake pedal 14 is applied, service air under pressure in the Yellow Line 16 will enter chamber 40 and push the piston 34 downwards as shown in Fig 2. Air in the space beneath the piston 34 escapes through the vent 39. The downward movement of the piston 34 compresses the spring 38 and allows the pressure on surface A to push the piston 54 out of contact with the seat 52 so as to open the orifice 51. Once the piston 54 clears the seat 52, Red Line air pressure will be applied to the chamber 60 and will act on the entire surface area of the piston (area A plus the annular area indicated at B in Fig 1). The pressure on areas A plus B urges the piston 54 downwards into contact with the guide 44 which acts as a stop. The Red Line air holds the piston 54 in that position whatever the pressure in chamber 40 as the downward force on the piston 54 is designed to be greater than the upward bias of the spring 38. Air in the space beneath the piston 54 escapes through the vent 62. Air from the outlet 50 applies pressure to the valve 22 so as to prevent air in the tank 20 applying the service brakes 24.

Where the tractor 10 is disconnected from the trailer 12. the disconnection of the Red line 18 from the valve 26 causes the pressure in chamber 60 to be vented via the inlet 48. Pressure in the valve 22 is thereby released causing air in the tank 20 to apply the service brakes 24. Disconnection of the Yellow Line 16 will allow the piston 34 to rise under the influence of the spring 38. Such rising movement of the piston 34 is transmitted to the piston 54 by the pushrod 46 causing the piston 54 to rise into contact with the seat 52. The non-return valve 61 ensures that there is no residual pressure in the chamber 60 which could reduce the braking force created by the application of air from the tank 20.

When the tractor 10 is reconnected to the trailer 12 and assuming that the Red Line is pressurised, reconnection of the Red Line 18 to the valve 26 will subject the area A to air pressure in the Red Line. However, as mentioned above, the area of surface A is such that the downward force acting on the piston 54 will not be sufficient to overcome the bias of the spring 38 and the piston 54 will continue to close the orifice 51. Therefore, pressure in the Red Line will not be applied to the valve 22 and the air pressure from tank 20 will continue to apply the service brakes 24. After reconnection of the Yellow Line 16, operation of the foot pedal 14 or other brake applying device by the driver to operate the service brakes 24 will depress the piston 34 and allow the piston 54 open the orifice 51. Although that will cause the valve 22 to close and terminate operation of the service brakes 24 by means of the air in tank 20, that condition can be achieved only when the service brakes have been applied by the driver thereby minimising significantly the risk of the vehicle running away as before when the Red Line is reconnected.

The present invention is equally suited to semitrailers (as described above) and full trailers where the trailer is connected to a tractor by a drawbar.

## Claims

1. A valve (26) for a wheel braking system of a tractor and trailer combination, the valve (26) comprising a service air inlet (30) for connection to a service air supply line (16), a service air outlet (32) for supplying air to control operation of a trailer wheel brake (24), an actuating member (34) responsive to service air pressure, a supply inlet (48) for connection to an air supply line (18) of the tractor, a supply outlet (50) for supplying air for actuation of a trailer wheel brake (24) and a valve member (54) for controlling flow of air between said supply inlet (48) and said supply outlet (50), the valve member (54) being movable against a bias applied by or via the actuating member (34) from a closed condition to an open condition, **characterised in that**
a) in the closed condition, air pressure at the supply inlet (48) acts on a first area of the valve member (54), the force developed on the first area being insufficient to overcome said bias;
b) in the open condition air pressure at the supply inlet (48) acts on a second area of the valve member (54), the force developed on said second area being sufficient to overcome said bias; and
c) air pressure at the service air inlet (30) acts on an area of said actuating member (34) in opposition to said bias, the force developed being sufficient to overcome said bias.

2. A valve according to claim 1 wherein said first and second areas of said valve member are concentric.

3. A valve according to claim 2 wherein said first area of said valve member is an inner area, and said second area is an inner and outer area.

4. A valve according to any preceding claim wherein said supply outlet (50) is connected to said supply inlet (48) via a non-return valve (61).

5. A valve according to any preceding claim wherein said valve member (54) and actuating member (34) abut.

6. A valve according to claim 5 wherein said valve member (54) and actuating member (34) are circular and coaxial.

7. A valve according to claim 6 wherein a pushrod (46) acts co-axially between said valve member (54) and actuating member (34).

8. A valve according to claim 7 wherein said supply inlet (48) terminates at an orifice (51) surrounded by a seat (52) for contact with said valve member (54), the seat (52) being co-axial with said valve member (54), and the valve member (54) housing an elastomeric inset (58) for sealing contact with said seat (52).

9. A valve according to any preceding claim wherein said bias comprises a coiled compression spring (38).

## Patentansprüche

1. Ventil (26) für ein Radbremssystem für eine Kombination aus einer Zugmaschine und einem Anhänger, wobei das Ventil (26) einen Betriebslufteinlass (30) zur Verbindung mit einer Betriebsluftzufuhrleitung (16), einen Betriebsluftauslass (32) zum Zuführen von Luft zur Steuerung des Betriebs einer Anhängerradbremse (24), ein Betätigungsglied (34), das auf Betriebsluftdruck anspricht, einen Zufuhreinlass (48) zur Verbindung mit einer Luftzufuhrleitung (18) der Zugmaschine, einen Zufuhrauslass (50) zum Zuführen von Luft zur Betätigung einer Anhängerradbremse (24) und ein Ventilglied (54) zum Steuern des Luftstroms zwischen dem Zufuhreinlass (48) und dem Zufuhrauslass (50) umfasst, wobei das Ventilglied (54) gegen eine Vorspannung, die durch oder über das Betätigungsglied (34) aufgebracht wird, von einem geschlossenen Zustand zu einem geöffneten Zustand verschiebbar ist, **dadurch gekennzeichnet, dass**
a) im geschlossenen Zustand der Luftdruck am Zufuhreinlass (48) auf eine erste Fläche des Ventilgliedes (54) wirkt, wobei die auf der ersten Fläche entwickelte Kraft nicht ausreicht, um die Vorspannung zu überwinden;
b) im geöffneten Zustand der Luftdruck am Zufuhreinlass (48) auf eine zweite Fläche des Ventilgliedes (54) wirkt, wobei die auf der zweiten Fläche entwickelte Kraft ausreicht, um die Vorspannung zu überwinden; und
c) Luftdruck am Lufteinlass (30) auf eine Fläche des Betätigungsgliedes (34) entgegengesetzt zur Vorspannung wirkt, wobei die entwickelte Kraft ausreichend ist, um die Vorspannung zu überwinden.

2. Ventil nach Anspruch 1, worin die erste und zweite Fläche des Ventilgliedes konzentrisch sind.

3. Ventil nach Anspruch 2, worin die erste Fläche des Ventilgliedes eine Innenfläche ist und die zweite Fläche eine Innen- und Außenfläche ist.

4. Ventil nach einem der vorhergehenden Ansprüche, worin der Zufuhrauslass (50) mit dem Zufuhreinlass (48) über ein Rückschlagventil (61) verbunden ist.

5. Ventil nach einem der vorhergehenden Ansprüche, worin das Ventilglied (54) und das Betätigungsglied (34) aneinander stoßen.

6. Ventil nach Anspruch 5, worin das Ventilglied (54) und das Betätigungsglied (34) kreisförmig und koaxial sind.

7. Ventil nach Anspruch 6, worin eine Ventilstange (46) koaxial zwischen dem Ventilglied (54) und dem Betätigungsglied (34) wirkt.

8. Ventil nach Anspruch 7, worin der Zufuhreinlass (48) in einer Öffnung (51) endet, die zum Kontakt mit dem Ventilglied (54) von einem Sitz (52) umgeben ist, wobei der Sitz (52) koaxial zum Ventilglied (54) ist und das Ventilglied (54) einen elastomeren Einsatz (58) für dichtenden Kontakt mit dem Sitz (52) aufnimmt.

9. Ventil nach einem der vorhergehenden Ansprüche, worin die Vorspannung eine Kompressionsspiralfeder (38) umfasst.

## Revendications

1. Soupape (26) pour circuit de freinage de roues d'une combinaison d'un tracteur et d'une remorque, la soupape (26) comportant une entrée (30) d'air de service destinée à être raccordée à une conduite (16) d'alimentation en air de service, une sortie (32) d'air de service destinée à transmettre de l'air pour la commande du fonctionnement d'un frein (24) de roue de remorque, un organe de manoeuvre (34) commandé par la pression d'air de service, une entrée (48) d'alimentation destinée à être raccordée à une conduite (18) d'alimentation en air du tracteur, une sortie (50) d'alimentation destinée à transmettre de l'air de manoeuvre d'un frein (24) de roue de remorque et un organe obturateur (54) destiné à régler l'écoulement de l'air entre l'entrée d'alimentation (48) et la sortie d'alimentation (50), l'organe obturateur (54) étant mobile, malgré la force de rappel appliquée par l'organe de manoeuvre (34) ou par l'intermédiaire de celui-ci, d'une position fermée vers une position ouverte, **caractérisée en ce que** :
a) en position fermée, la pression de l'air à l'entrée d'alimentation (48) agit sur une première surface de l'organe obturateur (54), la force créée sur la première surface étant insuffisante pour dépasser la force de rappel,
b) à l'état d'ouverture, la pression de l'air à l'entrée d'alimentation (48) agit sur une seconde surface de l'organe obturateur (54), la force créée sur la seconde surface étant suffisante pour dépasser la force de rappel, et
c) une pression d'air à l'entrée (30) d'air de service agit sur une surface de l'organe de manoeuvre (34) en sens opposé au sens de la force de rappel, la force créée étant suffisante pour dépasser la force de rappel.

2. Soupape selon la revendication 1, dans laquelle la première et la seconde surface de l'organe obturateur sont concentriques.

3. Soupape selon la revendication 2, dans laquelle la première surface de l'organe obturateur est une surface interne et la seconde surface est une surface interne et externe.

4. Soupape selon l'une quelconque des revendications précédentes, dans laquelle la sortie d'alimentation (50) est raccordée à l'entrée d'alimentation (48) par l'intermédiaire d'un clapet de retenue (61).

5. Soupape selon l'une quelconque des revendications précédentes, dans laquelle l'organe obturateur (54) et l'organe de manoeuvre (34) sont en butée.

6. Soupape selon la revendication 5, dans laquelle l'organe obturateur (54) et l'organe de manoeuvre (34) sont circulaires et coaxiaux.

7. Soupape selon la revendication 6, dans laquelle une tige de poussée (46) agit coaxialement entre l'organe obturateur (54) et l'organe de manoeuvre (34).

8. Soupape selon la revendication 7, dans laquelle l'entrée d'alimentation (48) se termine à un orifice (51) entouré par un siège (52) destiné à être au contact de l'organe obturateur (54), le siège (52) étant coaxial à l'organe obturateur (54), et l'organe obturateur (54) logeant un élément élastomère inséré (58) destiné à être en contact étanche avec le siège (52).

9. Soupape selon l'une quelconque des revendications précédentes, dans laquelle la force de rappel est exercée par un ressort hélicoïdal de compression (38).
